# EUROPÄISCHE PATENTSCHRIFT

(11) **EP 4 421 332 B1**
(45) Veröffentlichungstag und Bekanntmachung des Hinweises auf die Patenterteilung: **10.09.2025**
(21) Anmeldenummer: 24155157.1
(22) Anmeldetag: 01.02.2024
(51) Int. Cl.: F16B 13/06, F16B 13/12

(54) **SPREIZDÜBEL AUS KUNSTSTOFF**
PLASTIC DOWEL
CHEVILLE À EXPANSION EN MATIÈRE PLASTIQUE

(30) Priorität: 21.02.2023 DE 102023104243; 26.10.2023 DE 102023129496
(43) Veröffentlichungstag der Anmeldung: 28.08.2024
(73) Patentinhaber: fischerwerke GmbH & Co. KG, 72178 Waldachtal (DE)
(72) Erfinder: Frey, Christian, 72250 Freudenstadt-Wittlensweiler (DE)
(74) Vertreter: Suchy, Ulrich Johannes

(56) Entgegenhaltungen:
- EP-A1- 3 477 126
- WO-A1-2011/098241
- WO-A1-2016/015823
- FR-A1- 3 027 639
- US-A1- 2009 285 649
- ITW ELEMATIC: "TRIDER the heavy-duty anchor designed for hollow base materials", 26 February 2019 (2019-02-26), XP093286253, Retrieved from the Internet <URL:https://www.youtube.com/watch?v=L_368ObjmZA>
- ITW ELEMATIC: "TRIDER - THE FIRST MECHANICAL ANCHOR DESIGNED FOR HOLLOW AND SOLID BASE MATERIALS", 20 January 2021 (2021-01-20), XP093286257, Retrieved from the Internet <URL:https://www.youtube.com/watch?v=W1F8eaEi2IU>
- ITW ELEMATIC: "Chevilles pour charges légères et lourdes: BlueFix et Trider", 20 January 2021 (2021-01-20), XP093286259, Retrieved from the Internet <URL:https://www.youtube.com/watch?v=qiHsi6GzXWQ>

## Beschreibung

Die Erfindung betrifft einen Spreizdübel aus Kunststoff mit den Merkmalen des Oberbegriffs des Anspruchs 1.

Ein gattungsgemäßer Spreizdübel ist aus der Internationalen Patentanmeldung WO 2016/015823 A1 bekannt. Der gattungsgemäße Spreizdübel besteht aus zwei Grundkörpern aus Kunststoff, die beide in einem Spreizbereich Spreizelemente aufweisen. Ein Hülsenabschnitt des zweiten Grundkörpers ist mit einen Mutterabschnitt am vorderen Ende des ersten Grundkörpers durch Umspritzen beim Herstellen des Spreizdübels im Mehrkomponentenspritzgussverfahren formschlüssig fest verbunden. Am Hülsenabschnitt sind zwei Spreizarme einstückig als Spreizelemente angeordnet, die entgegen der Einbringrichtung, in die der Spreizdübel planmäßig in ein Bohrloch eingebracht wird, vom Hülsenabschnitt kragarmförmig nach hinten abstehen. Zum Verankern des Spreizdübels in einem Bohrloch wird eine Schraube in einen mittig in Richtung der Längsachse des Spreizdübels verlaufenden Schraubkanal eingedreht, wodurch die Spreizarme an ihren hinteren Enden zuerst und am stärksten aufgespreizt und dadurch gegen eine Wand des Bohrlochs gepresst werden.

Aufgabe der Erfindung ist, das Spreizverhalten des bekannten Spreizdübels weiter zu verbessern.

Diese Aufgabe wird erfindungsgemäß durch einen Spreizdübel mit den Merkmalen des Anspruchs 1 gelöst. Die abhängigen Ansprüche haben vorteilhafte Ausgestaltungen und Weiterbildungen der im Anspruch 1 angegebenen Erfindung zum Gegenstand.

Der erfindungsgemäße Spreizdübel umfasst einen ersten Grundkörper aus einem ersten Kunststoff und einen zweiten Grundkörper aus einem zweiten Kunststoff. Die beiden Kunststoffe sind unterschiedlich, insbesondere in ihrer Art, in ihrer Farbe, in ihrer Festigkeit und/oder im Gehalt an Fasern, wie beispielsweise Glasfasern, die insbesondere zur Verstärkung des jeweiligen Kunststoffs dienen. Beispielsweise besteht der erste Grundkörper aus grauem Polyamid, während der zweite Grundkörper aus rotem, glasfaserverstärktem Polypropylen besteht. Insbesondere bildet der erste Grundkörper beim Spritzgießen eine Art Kern für den zweiten Grundkörper, der auf den ersten Grundkörper aufgespritzt beziehungsweise um den zweiten Grundkörper umspritzt wird.

Der Spreizdübel erstreckt sich entlang einer Längsachse und weist bezogen auf eine Einbringrichtung vorne einen Mutterabschnitt, bezogen auf die Einbringrichtung hinten einen Kopfabschnitt und dazwischen einen Spreizabschnitt auf. Die "Einbringrichtung" ist die Richtung, in die der Spreizdübel in ein Bohrloch eingebracht wird. Insbesondere verjüngt sich der Dübel in Einbringrichtung am vorderen Ende, insbesondere konisch, woran insbesondere die Einbringrichtung zu erkennen ist. In Einbringrichtung vorne, oder einbringseitig vorne ist der Teil des Spreizdübels, der beim planmäßigen Einbringen des Spreizdübels in ein Bohrloch als erstes in das Bohrloch gelangt. Beim erfindungsgemäßen Spreizdübel ist dies der Mutterabschnitt, dem dann der Spreizabschnitt und gegebenenfalls der hintere Kopfabschnitt folgt.

Der Mutterabschnitt dient zum Eingriff eines Schraubengewindes einer Schraube, die zum Aufspreizen des Spreizdübels und zum Befestigen eines Bauteils am Verankerungsgrund in einen Schraubkanal des Spreizdübels eingeschraubt wird. Insbesondere ist der Mutterabschnitt radial aufweitbar, so dass Schrauben mit unterschiedlichen Durchmessern und Gewindeformen einen sicheren Halt im Mutterabschnitt finden. Beispielsweise besteht der Mutterabschnitt aus zwei Halbschalen, die über dehn- beziehungsweise aufweitbare Verbinder miteinander verbunden sind. Zum besseren Halt der Schraube im Mutterabschnitt kann der Mutterabschnitt ein Innengewinde und/oder ein Metallkörper als Widerlager für das Schraubengewinde aufweisen.

Der Spreizdübel ist insbesondere derart gestaltet, dass der Mutterabschnitt durch weiteres Drehen der Schraube gegen den Kopfabschnitt bewegt werden kann, wenn der Schraubenkopf am Kopfabschnitt des Spreizdübels oder an einem zu befestigenden Bauteil, das direkt oder indirekt gegen den Kopfabschnitt verspannt wird, anliegt. Eine Bewegung des Mutterabschnitts zum Kopfabschnitt ist nicht immer möglich, sondern hängt von der Art des Verankerungsgrunds ab, in dem das Bohrloch erstellt wurde: Ist das Bohrloch in einem massiven, harten Material wie Beton erstellt worden, beispielsweise in einer Außenwand oder Decke eines Gebäudes, dann wird der Spreizdübel regelmäßig bereits nach dem Einbringen in das Bohrloch flächig an der Bohrlochwand anliegen und eine Bewegung des Mutterabschnitts zum Kopfabschnitt nicht oder nur in geringem Maße möglich sein. In diesem Fall dient der Mutterabschnitt insbesondere als Widerlager für die Schraube, in dem die Schraube mit ihrem Gewinde einen festen Halt findet. Damit ist auch dann noch ein Vortrieb der Schraube beim Einschrauben gewährleistet, wenn der Spreizabschnitt des Spreizdübels aufgespreizt, also sein Material nach außen gegen die Bohrlochwand verdrängt und der Schraubkanal dadurch im Spreizbereich geweitet worden ist.

Besteht der Verankerungsgrund dagegen aus einem Hohlmaterial, wie beispielsweise Hochlochziegeln, oder aus Platten, wie beispielsweise Gipskartonplatten, dann wird durch das Heranziehen des Mutterabschnitts gegen den Kopfabschnitt der Spreizabschnitt gestaucht, wenn Mutter- und Spreizabschnitt in einem der Hohlräume des Verankerungsgrunds liegen. Dabei spreizen, knicken und/oder verknoten Spreizelemente des Spreizabschnitts, wodurch der Spreizabschnitt stark aufgespreizt, das heißt im Durchmesser geweitet wird. Dadurch können die Spreizelemente an Wandungen des Verankerungsgrunds formschlüssig anliegen und auch in diesen Materialien den Spreizdübel fest verankern.

Beim erfindungsgemäßen Spreizdübel sind im Spreizabschnitt Spreizkörper und Spreizarme als Spreizelemente angeordnet. Der erste Grundkörper weist im Spreizabschnitt mindestens zwei durch Schlitze voneinander getrennte Spreizkörper auf, die mit dem Mutterabschnitt und dem Kopfabschnitt verbunden sind. Mit "Schlitzen" sind Öffnungen gemeint. Die Öffnungen sind in Umfangsrichtung insbesondere schmaler als die Spreizkörper, können aber auch breiter sein. Insbesondere sind die Schlitze in Längsrichtung schmal und lang gestreckt. Die Schlitze trennen die beiden Spreizkörper in Umfangsrichtung, so dass die beiden Spreizkörper in Umfangsrichtung voneinander beabstandet sind. Die Verbindung der Spreizkörper mit dem Mutterabschnitt und/oder dem Kopfabschnitt ist insbesondere einstückig. Die Spreizkörper sind insbesondere einstückig mit dem Mutterabschnitt und/oder dem Kopfabschnitt des Spreizdübels hergestellt. Insbesondere ist der erste Grundkörper einstückig und besteht aus den Spreizkörpern, dem Mutterabschnitt und dem Kopfabschnitt, die mittels der Spreizkörper fest verbunden sind. Die Spreizkörper sind in diesem Fall mit ihren vorderen und hinteren Enden fest und einstückig mit dem Mutterabschnitt und dem Kopfabschnitt verbunden beziehungsweise dort angespritzt.

Dagegen weist der zweite Grundkörper im Spreizabschnitt mindestens zwei Spreizarme auf, die in Umfangsrichtung ebenfalls voneinander beabstandet sind. Die Spreizarme erstrecken sich kragarmförmig parallel zur Längsachse. Die Spreizarme sind mit einem Verbindungselement des zweiten Grundkörpers verbunden, das zumindest einen der Kragarme mit sich und/oder weiteren Teilen verbindet, vorzugsweise mit dem zweiten Spreizarm. Sind mehr als zwei Spreizarme vorhanden, so sind vorzugsweise alle Spreizarme durch das Verbindungselement miteinander verbunden, insbesondere einstückig, insbesondere durch die Herstellung durch Spritzgießen. Insbesondere sind die Spreizarme ausschließlich im Kopfabschnitt miteinander verbunden und nicht noch zusätzlich im Spreizbereich und/oder im Mutterabschnitt.

"Kragarmförmig" bedeutet, dass die Spreizarme nur an einem ihrer Längsenden mit dem übrigen Teil des zweiten Grundkörpers verbunden sind.

Erfindungsgemäß sind die beiden Spreizarme mit ihren hinteren Enden mit dem Kopfabschnitt verbunden, also mit Teilen des zweiten Grundkörpers, die Teile des Kopfabschnitts bilden und/oder mit Teilen des Kopfabschnitts verbunden sind. Eine feste Verbindung mit dem Mutterabschnitt besteht nicht; insbesondere keine stoffschlüssige und/oder einstückige Verbindung. Das freie Ende vordere eines Spreizarms kann aber am ersten Grundkörper anliegen und insbesondere formschlüssig gehalten sein.

Insbesondere liegen die Spreizarme in Umfangsrichtung zwischen den Spreizkörpern. Insbesondere liegen die Spreizarme in Umfangsrichtung an den Spreizkörpern an, insbesondere derart, dass sie den Schraubkanal im Spreizbereich im Wesentlichen radial nach außen verschließen, was eine gute Führung der Schraube beim Einschrauben im Schraubkanal gewährleistet. Alternativ können zwischen den Spreizarmen und dem Spreizkörper Abstandsschlitze vorgesehen sein, die die Verformbarkeit des Spreizdübels beim Einstecken des Spreizdübels in ein Bohrloch begünstigen.

Insbesondere sind die Spreizkörper und/oder die Spreizarme gleichmäßig über den Umfang des Spreizdübels verteilt angeordnet. Das heißt, die Abstände zwischen den zwei Spreizkörpern sind in Umfangsrichtung gleich, und/oder die Abstände zwischen den zwei Spreizarmen sind in Umfangsrichtung gleich. Sind mehr als zwei Spreizkörper und/oder Spreizarme vorhanden, so sind insbesondere die Abstände zwischen jeweils zwei Spreizkörpern in Umfangsrichtung gleich, und/oder die Abstände zwischen jeweils zwei Spreizarmen sind in Umfangsrichtung gleich. Bei einer geradzahligen Anzahl von Spreizarmen liegen sich die Spreizarme und bei einer geradzahligen Anzahl von Spreizkörpern die Spreizkörper jeweils bezogen auf die Längsachse gegenüber.

Das Verbindungselement ist vorzugsweise im Kopfabschnitt drehfest und/oder axialfest mit einem Hülsenkörper des ersten Grundkörpers verbunden. Insbesondere bilden der Hülsenkörper und das Verbindungselement den Kopfabschnitt. Der "Hülsenkörper" muss nicht als vollständige zylindrische Hülse ausgeformt sein, sondern sich im Wesentlichen in Umfangsrichtung erstrecken. Der Hülsenkörper kann aber Öffnungen und Schlitze aufweisen. Insbesondere ist das Verbindungselement im Mehrkomponentenspritzgussverfahren auf den ersten Grundkörper aufgespritzt, so dass das Material des zweiten Grundkörpers in Öffnungen des ersten Grundkörpers eindringen kann und dadurch die dreh- und/oder axialfeste Verbindung herstellt.

"Dreh- und/oder axialfest" bezieht sich auch hier auf die Längsachse des Spreizdübels und auf beide Richtungen entlang und um die Achse.

Bei einer bevorzugten Ausgestaltungsform des erfindungsgemäßen Spreizdübels ist der Mutterabschnitt ausschließlich vom ersten Grundkörper gebildet und besteht ausschließlich aus dem ersten Kunststoff.

Bei einer weiteren bevorzugten Ausgestaltung des erfindungsgemäßen Spreizdübels sind die Innenseiten der Spreizarme an ihren vorderen Enden, die dem Mutterabschnitt zugewandt sind, keilförmig angeschrägt, insbesondere mit einer von vorne nach hinten nach innen hin zunehmenden Wandstärke. Die "Wandstärke" ist die Dicke der Spreizarme beziehungsweise der Spreizkörper radial zur Längsachse. Dies erleichtert ein Aufspreizen der Spreizarme, das dadurch erfolgt, dass der Mutterabschnitt durch Drehen der Schraube zum Kopfabschnitt hinbewegt wird, wodurch sich der Spreizdübel in Längsrichtung, also in Richtung der Längsachse verkürzt. Dabei wird der Mutterabschnitt zwischen die Spreizarme eingezogen, wodurch diese aufgespreizt werden. Die keilförmigen Innenseiten erleichtern dieses Einziehen, beziehungsweise sie können mit Gegenkeilflächen am Mutterkopf zusammenwirken, die das Aufspreizen erleichtern und/oder den Spreizdruck durch eine Erhöhung der Anlagefläche verstärken. Insbesondere weisen die Spreizarme am hinteren Ende ihrer keilförmigen Anschrägung die maximale Wandstärke auf, so dass beim Aufspreizen in diesem Bereich große Spreizkräfte über die Spreizarme auf den Verankerungsgrund übertragen werden können.

Vorzugsweise weist der Spreizdübel einen Schaubkanal auf, der mittig und entlang der Längsachse im Spreizdübel angeordnet ist. Der Schraubkanal weist im Spreizabschnitt einen Durchmesser auf, der seinem Durchmesser im Bereich des Muttterkörpers entspricht. Dadurch sind hohe Spreizkräfte beim Aufspreizen durch Eindrehen einer Schraube in den Schraubkanal und eine gute Führung der Schraube im Schraubkanal gewährleistet.

Weiterhin ist bevorzugt, dass die Spreizarme eine Wandstärke aufweisen, die größer oder gleich der Wandstärke der Spreizkörper ist. Die Spreizarme sind somit stabil genug, um bei radialem Aufspreizen durch Pressung gegen die Bohrlochwand einen guten Halt im Bohrloch zu gewährleisten. Insbesondere ist die Wandstärke der Spreizarme nicht nur in einem beliebigen Querschnitt gleich oder größer als die der Spreizkörper, sondern in jedem Querschnitt.

Bei einer weiteren bevorzugten Ausgestaltungsform des erfindungsgemäßen Spreizdübels liegen die Spreizarme mit ihren vorderen Enden am Mutterabschnitt an und stützen sich insbesondere an diesem ab. Vorzugsweise sind die Spreizarme hierzu an ihren vorderen Enden verjüngt, insbesondere in Umfangsrichtung, und liegen in einem unverspreizten Zustand in korrespondierenden Ausnehmungen des Mutterabschitts ein. "Verjüngt" meint hier insbesondere, dass die vorderen Enden der Spreizarme keil- V- oder U-förmig ausgebildet sind. Die Spreizarme können sich dadurch auch unter Quer- und/oder Torsionsbelastung, wie sie beim Einschieben des Spreizdübels in ein Bohrloch auftreten können, sicher am Mutterabschnitt abstützen, insbesondere formschlüssig, so dass die beiden Grundkörper eine stabile Einheit bilden, auch wenn die vorderen Enden der Spreizarme nicht mit dem ersten Grundkörper einstückig oder stoffschlüssig verbunden sind.

Vorzugsweise sind die Spreizarme durch ein Ringelement als Verbindungselement miteinander verbunden. Das Ringelement ist insbesondere in Umfangsrichtung geschlossen. Es ist insbesondere einstückig durch Spritzgießen hergestellt. Insbesondere ist das Ringelement eine ringförmige Hülse, deren axiale Erstreckung größer als ihre radiale Dicke ist, wobei sich "axial" und "radial" stets auf die Längsachse des Spreizdübels bezieht.

Um ein besonders gutes Spreizverhalten zu ermöglichen, sind die Spreizarme vorzugsweise aus härterem Kunststoff hergestellt als die Spreizkörper. Insbesondere sind die Spreizarme aus einem faserverstärkten Kunststoff hergestellt, während die Spreizkörper insbesondere keine Faserverstärkung aufweisen. Die Spreizarme spreizen durch ein Einziehen des Mutterabschnitts zwischen die freien Enden der Spreizarme V-förmig auf, also dann, wenn der Mutterabschnitt zum Kopfabschnitt hin bewegt wird. Der härtere Kunststoff bewirkt, dass dabei große Spreizkräfte vom Mutterabschnitt über die Spreizarme auf den Verankerungsgrund übertragen werden können. Dagegen können die Spreizkörper, die keine freien Enden aufweisen, durch die Verwendung eines weicheren Kunststoffs bei der Bewegung des Mutterabschnitts zum Kopfabschnitt ausknicken und sich gut verformen, so dass ein formschlüssiges Hintergreifen von Stegen und Platten von Hohlbaustoffen gut möglich ist. Die unterschiedlichen Spreizverhalten von Spreizarmen und Spreizkörpern ergänzen sich und sorgen für sehr guten Halt, insbesondere in Hohlbaustoffen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von zwei in der Zeichnung dargestellten Ausführungsbeispielen näher erläutert.

Es zeigen:
- Figur 1: einen ersten erfindungsgemäßen Spreizdübel in einer perspektivischen Ansicht;
- Figur 2: den ersten erfindungsgemäßen Spreizdübel in einer Seitenansicht;
- Figur 3: einen ersten Grundkörper des erfindungsgemäßen Spreizdübels der Figuren 1 und 2 in einer perspektivischen Ansicht;
- Figur 4: einen zweiten Grundkörper des erfindungsgemäßen Spreizdübels der Figuren 1 und 2 in einer perspektivischen Ansicht;
- Figur 5: einen Axialschnitt entlang der Längsachse durch den erfindungsgemäßen Spreizdübel der Figuren 1 und 2 in einer Ebene, die senkrecht zur Bildebene der Figur 2 verläuft;
- Figur 6: einen Axialschnitt entlang der Längsachse durch den erfindungsgemäßen Spreizdübel der Figuren 1 und 2 in einer Ebene, die parallel zur Bildebene der Figur 2 verläuft;
- Figur 7: einen zweiten erfindungsgemäßen Spreizdübel in einer perspektivischen Ansicht; und
- Figur 8: den zweiten erfindungsgemäßen Spreizdübel in einer Seitenansicht.

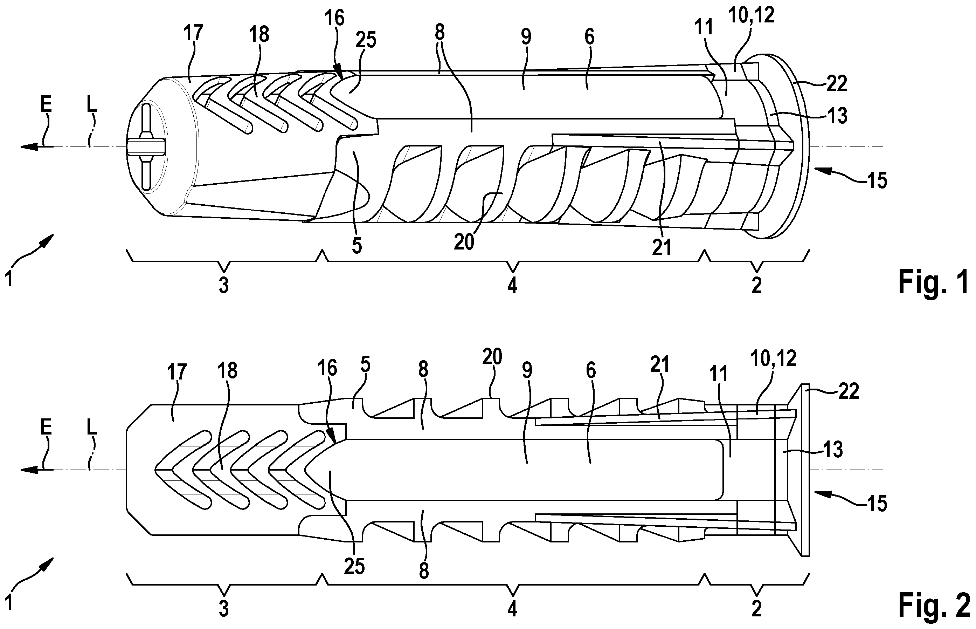

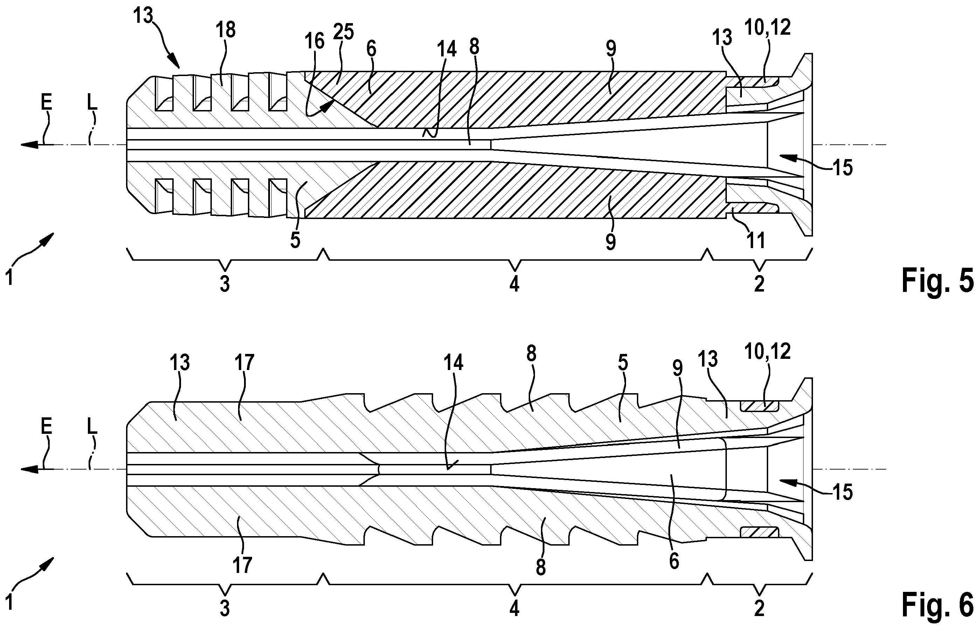

In den Figuren 1 bis 6 ist ein erster erfindungsgemäßer Spreizdübel 1 dargestellt. Der Spreizdübel 1 erstreckt sich entlang einer Längsachse L und besteht aus einem ersten Grundkörper 5 aus einem ersten Kunststoff, nämlich Polyamid, und aus einem zweiten Grundkörper 6 aus einem zweiten Kunststoff, nämlich Polypropylen. An dem in Einbringrichtung E vorderen Ende des Spreizdübels 1 befindet sich ein Mutterabschnitt 3, an seinem hinteren Ende ein Kopfabschnitt 2 und dazwischen ein Spreizabschnitt 4 (Figur 2).

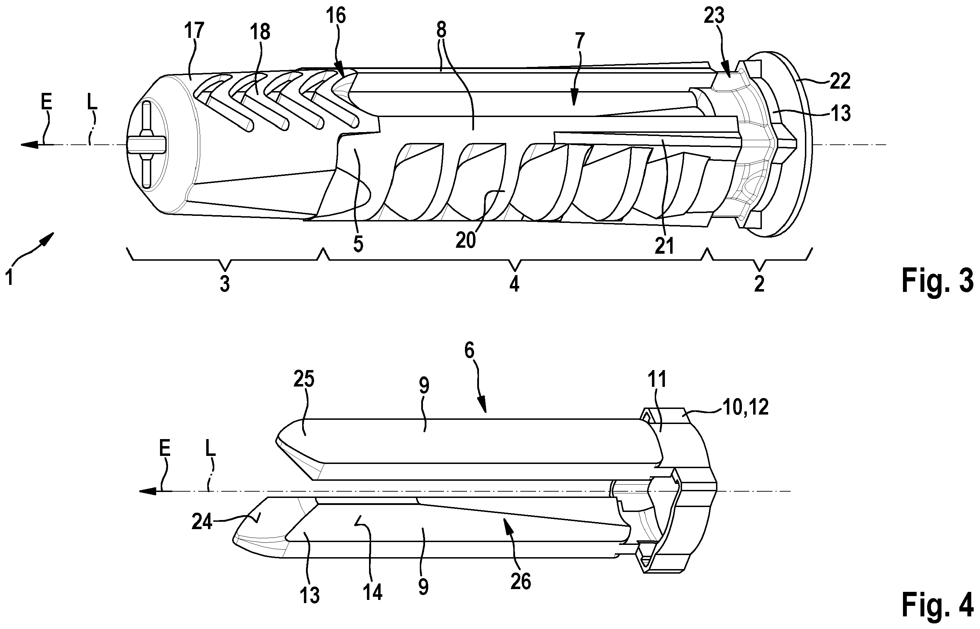

Der erste Grundkörper 5 ist in Figur 3 als einzelnes Teil dargestellt, der zweite Grundkörper 6 in Figur 4. Hergestellt wird der Spreizdübel 1 im Zweikomponentenspritzgussverfahren, wobei zunächst der erste Grundkörper 5 gespritzt wird und dann der zweite Grundkörper 6 auf den ersten Grundkörper 5 auf- beziehungsweise an diesen angespritzt wird.

Wie insbesondere in Figur 3 zu sehen ist, ist der erste Grundkörper 5 einstückig und bildet einen Großteil des Kopfabschnitts 2 des Spreizdübels 1 und den Mutterabschnitt 3 des Spreizdübels 1 vollständig. Der Kopfabschnitt 2 und der Mutterabschnitt 3 sind durch den Spreizabschnitt 4 verbunden, in dem zwei säulenartige Spreizkörper 8 des ersten Grundkörpers 5 angeordnet sind, die durch zwei, von der Längsachse L nach außen verlaufende, Schlitze 7 in Umfangsrichtung voneinander getrennt und beabstandet sind. Die beiden Spreizkörper 8 definieren den Spreizabschnitt 4 des Spreizdübels 1.

Der das vordere Ende des Spreizdübels 1 definierende Mutterabschnitt 3 ist ausschließlich vom ersten Grundkörper 5 gebildet und besteht somit ausschließlich aus dem ersten Kunststoff. Der Mutterabschnitt 3 besteht aus zwei Halbschalen 17, die, bezogen auf die Längsachse L, radial voneinander beabstandet und sich gegenüberliegend um einen vorderen Abschnitt eines den gesamten Spreizdübel 1 durchlaufenden Schraubkanals 15 angeordnet sind. Der Schraubkanal 15 ist mittig und entlang der Längsachse L im Spreizdübel 1 angeordnet und dient zur Aufnahme einer Schraube, die zum Spreizen und Befestigen des Spreizdübels 1 in einem Bohrloch in den Spreizkanal eingeschraubt wird (nicht dargestellt). Die beiden Halbschalen 17 sind durch vier V-förmige Verbinder 18 in Umfangsrichtung miteinander verbunden. Beim Einschrauben einer Schraube in den Schraubkanal 15 können die elastisch verformbaren Verbinder 18 in Umfangsrichtung gestreckt werden. Dabei bewegen sich die beiden Halbschalen 17 voneinander weg und der Querschnitt des Schraubkanals 15 wird vergrößert, so dass auch Schrauben mit größerem Durchmesser aufgenommen werden können. Wird dagegen eine Schraube mit kleinerem Durchmesser in den Schraubkanal 15 eingeschraubt, so sorgen die elastisch verformbaren Verbinder 18 dafür, dass die beiden Halbschalen 17 radial gegen die Schraube gepresst werden und somit auch eine Schraube mit kleinerem Durchmesser im Mutterabschnitt 3 zum Einschrauben Halt findet und nicht durchdreht. Der in Einbringrichtung E jeweils hinterste Verbinder 18 bildet mit seiner Rückseite das vordere Ende einer Ausnehmung 16, in der das vordere Ende des zweiten Grundkörpers 6 einliegt, was nachfolgend genauer beschrieben wird.

An den hinteren Enden der beiden Halbschalen 17 sind die beiden Spreizkörper 8 einstückig mit dem Mutterabschnitt 3 verbunden. Die Spreizkörper 8 sind zudem an ihren hinteren Enden mit dem Kopfabschnitt 2 einstückig, so dass sie beidseitig eingespannte Biegebalken bilden. Abhängig vom Verankerungsgrund können die beiden Biegebalken mit einer Schraube flächig radial zu Längsachse L nach außen gedrückt werden, beispielsweise dann, wenn das Bohrloch in einem Vollbaustoff, beispielsweise in einer Wand aus Beton, gebohrt wurde. Ist das Bohrloch dagegen in einem Hohlbaustoff, wie einem Plattenbaustoff oder einem Hochlochziegel erstellt worden, so können die Biegebalken radial nach außen ausknicken, wenn der Mutterabschnitt 3 beim Einschrauben der Schraube relativ zum und gegen den Kopfabschnitt 2 bewegt wird. An der Außenseite der beiden Spreizkörper 8 sind Querrippen 20 ausgebildet, die beim Aufspreizen Unebenheiten des Bohrlochs hintergreifen können und dadurch den Halt des Spreizdübels 1 im Bohrloch verbessern. An ihren hinteren Enden sind an den Spreizkörpern 8 je zwei, zu den Seitenrändern hin versetzte Längsrippen 21 angeordnet, die sich bis zu einem umlaufenden Radialbund 22 des Kopfabschnitts 2 erstrecken. Die Längsrippen 21 dienen zur Verdrehsicherung des Spreizdübels 1 im Bohrloch, indem die Längsrippen 21 in die Bohrlochwand eingreifen beziehungsweise sich, beispielsweise bei einer Gipskartonplatte, in die Bohrlochwand einschneiden und beim Eindrehen einer Schraube ein Mitdrehen des Spreizdübels 1 mit der Schraube verhindern.

Der Kopfabschnitt 2 ist als im Wesentlichen in Umfangsrichtung geschlossener zylindrischer Hülsenkörper 13 ausgebildet, der an seinem hinteren Ende den umlaufenden Radialbund 22 aufweist, der ein zu tiefes Einschieben des Spreizdübels 1 in ein Bohrloch verhindert. In seinem mittleren und seinem vorderen Teil weist der Kopfabschnitt 2 einen in Umfangsrichtung umlaufenden Nutabschnitt 23 auf, in dem die Wandstärke des Kopfabschnitts 2 und der Längsrippen 21 reduziert ist, so dass hier ein Verbindungselement 10 des zweiten Grundkörpers 6 als Teil des Kopfabschnitts 2 aufgespritzt werden kann.

Der zweite Grundkörper 6 ist in Figur 4 als Einzelteil dargestellt. Er umfasst das Verbindungselement 10, das als Ringelement 12 in Form einer geschlossenen Hülse ausgeführt ist, das einen Teil des Kopfabschnitts 2 des Spreizdübels 1 bildet. An dem Ringelement 12 sind zwei Spreizarme 9 kragarmförmig, ausschließlich mit ihren hinteren Enden 11, und einstückig angebunden, die gemeinsam mit den Spreizkörpern 8 des ersten Grundkörpers 13 den Spreizabschnitt 4 des Spreizdübels 1 bilden. Die Spreizarme 9 sind in Umfangsrichtung durch zwei sich von der Längsachse L radial nach außen erstreckende schlitzartige Öffnungen 26 getrennt und liegen sich, bezogen auf die Längsachse L, gegenüber. Die beiden Spreizarme 9 weisen einen im Wesentlichen rechteckförmigen Querschnitt auf und erstrecken sich parallel zur Längsachse L, im Ausführungsbeispiel geradlinig. Sie sind nur an dem Verbindungselement 10 miteinander verbunden, und liegen im unverspreizten Zustand in den Schlitzen 7 zwischen den beiden Spreizkörpern 8. Sie begrenzen gemeinsam mit den Spreizkörpern 8 mit ihren Innenseiten 14 den Schraubkanal 15 im Spreizabschnitt 4 radial nach außen und bilden somit einen Teil der Wand des Schraubkanals 15. Dabei sind die Spreizarme 9 und/oder die Spreizkörper 8 soweit von der Längsachse L beabstandet, dass der Durchmesser des Schraubkanals 15 im Spreizabschnitt dem Durchmesser des Schraubkanals 15 im Mutterabschnitt 3 entspricht. Dabei weisen die Spreizarme 9 eine in radialer Richtung gemessene Dicke auf, die der der beiden Spreizkörper 8 entspricht. Die Innenseiten 14 der Spreizarme 9 sind an ihren vorderen Enden 25, die dem Mutterabschnitt 3 zugewandt sind, keilförmig angeschrägt, so dass Keilflächen 24 ausgebildet sind, mit von vorne nach hinten nach innen hin zunehmender Dicke. Die Keilflächen 24 liegen in den Ausnehmungen 16 des Mutterabschnitts 3 und am Mutterabschnitt 3 an. Die vorderen Enden 25 der Spreizarme 9 sind zudem in Umfangsrichtung verjüngt, korrespondierend zu den Ausnehmungen 16 des Mutterabschnitts 3, wodurch sich die Spreizarme 9 beim Einbringen des Spreizdübels 1 in ein Bohrloch am Mutterabschnitt 3 abstützen können, so dass der Spreizdübel 1 beim Einbringen in sich stabilisiert ist und ein Knicken oder Tordieren beim Einbringen in ein Bohrloch verhindert.

Die Spreizarme 9 sind mittels des als Ringelement 12 ausgebildeten Verbindungselements 10 miteinander und mit dem Kopfabschnitt 2 verbunden. Aufgrund der im Kopfabschnitt 2 auch im Bereich des Nutabschnitts 23 ausgebildeten Längsrippen 21 ist das Verbindungselement 10 drehfest mit dem ersten Grundkörper 5, so dass auch die beiden Spreizarme 9 drehfest mit dem ersten Grundkörper 5 sind. Durch die nutartige Ausbildung des Nutabschnitts 23 sind zudem das Verbindungselement 10, wie auch die Spreizarme 9, axialfest zum ersten Grundkörper 5.

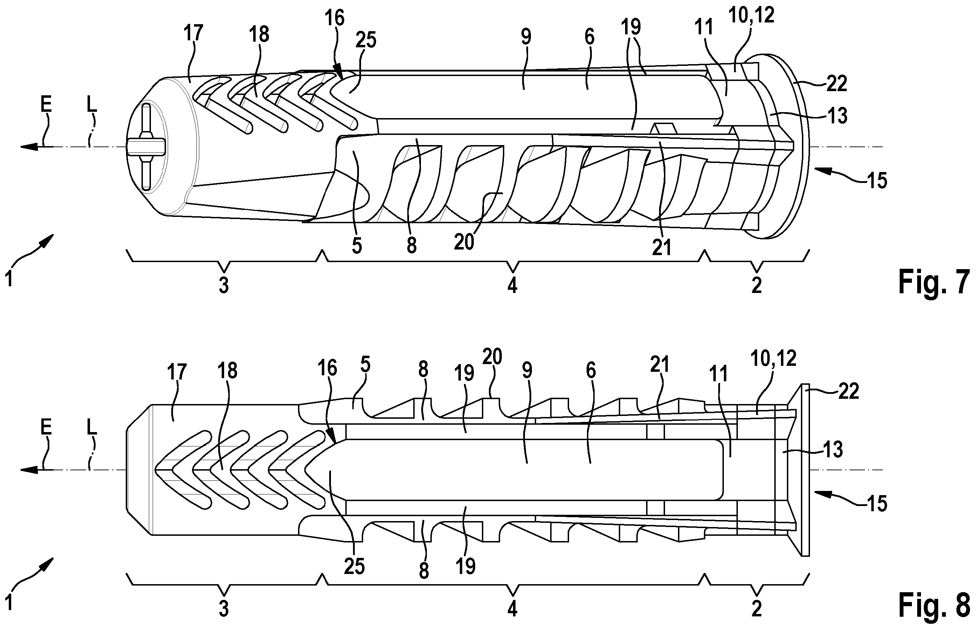

Der in den Figuren 7 und 8 dargestellte erfindungsgemäße Spreizdübel 1 unterscheidet sich von dem ersten erfindungsgemäßen Spreizdübel 1 der Figuren 1 bis 6 nur dadurch, dass die Spreizarme 9 schmäler ausgeführt sind, so dass zwischen den Spreizkörpern 8 und den Spreizarmen 9 Abstandsschlitze 19 vorhanden sind, durch die der Spreizdübel 1 in sich verformbarer wird, was das Einbringen des Spreizdübels 1 in ein enges Bohrloch erleichtert.

Beim Aufspreizen in einem Vollbaustoff werden die beiden Spreizarme 9, wie die beiden Spreizkörper 8 als Gesamtes, radial nach außen, vollflächig gegen die Bohrlochwand gedrückt. Wird dagegen der Spreizdübel 1 in ein Bohrloch in einem Plattenbaustoff eingesetzt, so wird durch das Einschrauben einer Schraube der Mutterabschnitt 3 nach hinten zu dem im Plattenbaustoff sitzenden Kopfabschnitt 2 gezogen. Dabei knicken die beiden Spreizkörper 8 U-förmig aus, wohingegen die beiden Spreizarme 9 als Kragarme aufspreizen und als Gesamtes um ihre hinteren Enden 11 um gedachte tangentiale Achsen im Bereich des Ringelements 12 schwenjen (nicht dargestellt). Dabei wird der Mutterabschnitt 3 gegen die Keilflächen 24 gedrückt und die Spreizarme 9 mit ihren vorderen Enden 25 radial nach außen bewegt, so dass der Mutterabschnitt 3 zwischen die Spreizarme 9 eingezogen werden kann. Aufgrund der beiden unabhängigen und andersartig gestalteten Spreizmechanismen der Spreizarme 9 und Spreizkörper 8, einmal als Kragarm und einmal als eine Art Kniegelenk, kann sich der Spreizdübel 1 sehr gut an unterschiedlichste Gegebenheiten im Bohrloch und somit an unterschiedlichste Verankerungsgründe anpassen. Durch das verbesserte Spreizverhalten findet der erfindungsgemäße Spreizdübel 1 auch in weniger stabilen Verankerungsgründen sehr guten Halt.

### Bezugszeichenliste

- 1: Spreizdübel
- 2: Kopfabschnitt
- 3: Mutterabschnitt
- 4: Spreizabschnitt
- 5: erster Grundkörper
- 6: zweiter Grundkörper
- 7: Schlitz
- 8: Spreizkörper
- 9: Spreizarm
- 10: Verbindungselement
- 11: hinteres Ende eines Spreizarms 9
- 12: Ringelement
- 13: Hülsenkörper des ersten Grundkörpers 5 im Kopfabschnitt 3
- 14: Innenseite
- 15: Schraubkanal
- 16: Ausnehmung des Mutterabschnitts 3
- 17: Halbschale des Mutterabschnitts 2
- 18: Verbinder
- 19: Abstandsschlitz
- 20: Querrippe
- 21: Längsrippe
- 22: Radialbund
- 23: Nutabschnitt
- 24: Keilfläche
- 25: vorderes Ende eines Spreizarms 9
- 26: Öffnungen
- E: Einbringrichtung
- L: Längsachse

## Patentansprüche

1. Spreizdübel (1) aus Kunststoff, der sich entlang einer Längsachse (L) erstreckt, bezogen auf eine Einbringrichtung (E) vorne einen Mutterabschnitt (3), bezogen auf die Einbringrichtung (E) hinten einen Kopfabschnitt (2) und dazwischen einen Spreizabschnitt (4) aufweist,
wobei der Spreizdübel (1) einen ersten Grundkörper (5) aus einem ersten Kunststoff und einen zweiten Grundkörper (6) aus einem zweiten Kunststoff umfasst,
wobei der erste Grundkörper (5) den Kopfabschnitt (2) und den Mutterabschnitt (3) bildet und im Spreizabschnitt (4) mindestens zwei durch Schlitze (7) voneinander getrennte Spreizkörper (8) aufweist, die mit dem Mutterabschnitt (3) und dem Kopfabschnitt (2) verbunden sind,
und wobei der zweite Grundkörper (6) im Spreizabschnitt (4) mindestens zwei Spreizarme (9) aufweist, die in Umfangsrichtung voneinander beabstandet sind, die sich parallel zur Längsachse (L) kragarmförmig erstrecken und die mit einem Verbindungselement (10) des zweiten Grundkörpers (6) verbunden sind,
**dadurch gekennzeichnet, dass** die beiden Spreizarme (9) mit ihren hinteren Enden (11) mit dem Kopfabschnitt (2) verbunden sind.

2. Spreizdübel (1) nach Anspruch 1, **dadurch gekennzeichnet, dass** die Spreizarme (9) im Kopfabschnitt (2) durch das Verbindungselement (10) miteinander verbunden sind.

3. Spreizdübel (1) nach Anspruch 2, **dadurch gekennzeichnet, dass** die Spreizarme (9) durch ein Ringelement (12) als Verbindungselement (10) miteinander verbunden sind.

4. Spreizdübel (1) nach Anspruch 3, **dadurch gekennzeichnet, dass** das Verbindungselement (10) im Kopfabschnitt (2) dreh- und/oder axialfest mit einem Hülsenkörper (13) des ersten Grundkörpers (5) verbunden ist.

5. Spreizdübel (1) nach einem der Ansprüche 1 bis 4, **dadurch gekennzeichnet, dass** der Mutterabschnitt (3) ausschließlich vom ersten Grundkörper (5) gebildet ist und ausschließlich aus dem ersten Kunststoff besteht.

6. Spreizdübel (1) nach einem der Ansprüche 1 bis 5, **dadurch gekennzeichnet, dass** die Innenseiten (14) der Spreizarme (9) an ihren vorderen Enden (25) keilförmig angeschrägt sind.

7. Spreizdübel (1) nach einem der Ansprüche 1 bis 6, **dadurch gekennzeichnet, dass** der Spreizdübel (1) einen Schraubkanal (15) aufweist, der mittig und entlang der Längsachse (L) im Spreizdübel (1) angeordnet ist, und der im Spreizabschnitt (4) einen Durchmesser aufweist, der seinem Durchmesser im Bereich des Mutterabschnitts (3) entspricht.

8. Spreizdübel (1) nach einem der Ansprüche 1 bis 7, **dadurch gekennzeichnet, dass** die Spreizarme (9) eine Wandstärke aufweisen, die größer oder gleich der Wandstärke der Spreizkörper (8) ist.

9. Spreizdübel (1) nach einem der Ansprüche 1 bis 8, **dadurch gekennzeichnet, dass** die Spreizarme (9) mit ihren vorderen Enden (25) am Mutterabschnitt (3) anliegen.

10. Spreizdübel (1) nach einem der Ansprüche 1 bis 9, **dadurch gekennzeichnet, dass** die Spreizarme (9) an ihren vorderen Enden (25) verjüngt sind und in einem unverspreizten Zustand in korrespondierenden Ausnehmungen (16) des Mutterabschnitts (3) einliegen.

## Claims

1. Expansion dowel (1) made of plastic, which extends along a longitudinal axis (L), has a nut section (3) at the front relative to an insertion direction (E), a head section (2) at the rear relative to the insertion direction (E) and an expansion section (4) between them,
wherein the expansion dowel (1) comprises a first base body (5) made of a first plastic and a second base body (6) made of a second plastic,
wherein the first base body (5) forms the head section (2) and the nut section (3) and has, in the expansion section (4), at least two expansion bodies (8) separated from one another by slots (7), which are connected to the nut section (3) and the head section (2),
and wherein the second base body (6) has, in the expansion section (4), at least two expansion arms (9) which are spaced apart from one another in the circumferential direction, which extend in a cantilevered manner parallel to the longitudinal axis (L) and which are connected to a connecting element (10) of the second base body (6),
**characterized in that** the two expansion arms (9) are connected by their rear ends (11) to the head section (2).

2. Expansion dowel (1) according to claim 1, **characterized in that** the expansion arms (9) are connected to each other in the head section (2) by the connecting element (10).

3. Expansion dowel (1) according to claim 2, **characterized in that** the expansion arms (9) are connected to one another by a ring element (12) as a connecting element (10) .

4. Expansion dowel (1) according to claim 3, **characterized in that** the connecting element (10) is connected in the head section (2) in a rotationally and/or axially fixed manner to a sleeve body (13) of the first base body (5).

5. Expansion dowel (1) according to one of claims 1 to 4, **characterized in that** the nut section (3) is formed exclusively by the first base body (5) and consists exclusively of the first plastic.

6. Expansion dowel (1) according to one of claims 1 to 5, **characterized in that** the inner sides (14) of the expansion arms (9) are wedge-shaped at their front ends (25).

7. Expansion dowel (1) according to one of claims 1 to 6, **characterized in that** the expansion dowel (1) has a screw channel (15) which is arranged centrally and along the longitudinal axis (L) in the expansion dowel (1) and which has a diameter in the expansion section (4) which corresponds to its diameter in the region of the nut section (3).

8. Expansion dowel (1) according to one of claims 1 to 7, **characterized in that** the expansion arms (9) have a wall thickness which is greater than or equal to the wall thickness of the expansion bodies (8).

9. Expansion dowel (1) according to one of claims 1 to 8, **characterized in that** the expansion arms (9) bear with their front ends (25) against the nut section (3).

10. Expansion dowel (1) according to one of claims 1 to 9, **characterized in that** the expansion arms (9) are tapered at their front ends (25) and, in an unexpanded state, lie in corresponding recesses (16) of the nut section (3).

## Revendications

1. Cheville à expansion (1) en matière plastique, qui s'étend le long d'un axe longitudinal (L), qui présente, par rapport à un sens d'insertion (E), une partie écrou (3) à l'avant, une partie tête (2) à l'arrière par rapport au sens d'insertion (E) et, entre celles-ci, une partie expansible (4),
la cheville à expansion (1) comprenant un premier corps de base (5) en une première matière plastique et un deuxième corps de base (6) en une deuxième matière plastique,
le premier corps de base (5) formant la partie tête (2) et la partie écrou (3) et présentant, dans la partie expansible (4), au moins deux corps expansibles (8) séparés l'un de l'autre par des fentes (7) et reliés à la partie écrou (3) et à la partie tête (2),
et le deuxième corps de base (6) comportant, dans la partie expansible (4), au moins deux bras expansibles (9) qui sont espacés l'un de l'autre dans la direction périphérique, qui s'étendent en porte-à-faux parallèlement à l'axe longitudinal (L) et qui sont reliés à un élément de liaison (10) du deuxième corps de base (6),
**caractérisé en ce que** les deux bras expansibles (9) sont reliés par leurs extrémités arrière (11) à la partie tête (2).

2. Cheville à expansion (1) selon la revendication 1, **caractérisée en ce que** les bras expansibles (9) sont reliés entre eux dans la partie tête (2) par l'élément de liaison (10).

3. Cheville à expansion (1) selon la revendication 2, **caractérisée en ce que** les bras expansibles (9) sont reliés entre eux par un élément annulaire (12) servant d'élément de liaison (10) .

4. Cheville à expansion (1) selon la revendication 3, **caractérisée en ce que** l'élément de liaison (10) est relié dans la partie tête (2) de manière fixe en rotation et/ou axialement à un corps de douille (13) du premier corps de base (5).

5. Cheville à expansion (1) selon l'une des revendications 1 à 4, **caractérisée en ce que** la partie écrou (3) est formée exclusivement par le premier corps de base (5) et est constituée exclusivement de la première matière plastique.

6. Cheville à expansion (1) selon l'une des revendications 1 à 5, **caractérisée en ce que** les faces intérieures (14) des bras expansibles (9) sont biseautées en forme de coin à leurs extrémités avant (25).

7. Cheville à expansion (1) selon l'une des revendications 1 à 6, **caractérisée en ce que** la cheville à expansion (1) présente un canal de vissage (15) qui est disposé au centre et le long de l'axe longitudinal (L) dans la cheville à expansion (1) et qui présente dans la partie expansible (4) un diamètre qui correspond à son diamètre dans la zone de la partie écrou (3).

8. Cheville à expansion (1) selon l'une des revendications 1 à 7, **caractérisée en ce que** les bras expansibles (9) présentent une épaisseur de paroi qui est supérieure ou égale à l'épaisseur de paroi des corps expansibles (8).

9. Cheville à expansion (1) selon l'une des revendications 1 à 8, **caractérisée en ce que** les bras expansibles (9) s'appuient par leurs extrémités avant (25) contre la partie écrou (3).

10. Cheville à expansion (1) selon l'une des revendications 1 à 9, **caractérisée en ce que** les bras expansibles (9) sont effilés à leurs extrémités avant (25) et reposent à l'état non expansé dans des évidements correspondants (16) de la partie écrou (3).
